Europäisches Patentamt

European Patent Office

Office européen des brevets

(11) Publication number: **0 420 409 A2**

# EUROPEAN PATENT APPLICATION

(21) Application number: 90309085.0

(22) Date of filing: 20.08.90

(51) Int. Cl.5: **G06F 5/06**

(30) Priority: 26.09.89 GB 8921653

(43) Date of publication of application:
03.04.91 Bulletin 91/14

(84) Designated Contracting States:
DE FR GB IT

(71) Applicant: LUCAS INDUSTRIES PUBLIC
LIMITED COMPANY
Great King Street

Birmingham, B19 2XF(GB)

(72) Inventor: Nash, Alan John
4, Dorrington Green, Perry Barr
Birmingham, B42 1QA(GB)

(74) Representative: Robinson, John Stuart et al
Marks & Clerk Alpha Tower Suffolk Street
Queensway
Birmingham, B1 1TT(GB)

(54) Interface circuit.

(57) An interface circuit for interfacing between a data processing system and a communication path has an output interface (2) including first-in/first-out memories (41-43). A read controller (56) causes the first memory (41) to be read in preference to the second memory (42), and the second memory (42) to be read in preference to the third memory (43). A write controller (36) writes data to the memories in accordance with the read priority of the data.

FIG.3.

## INTERFACE CIRCUIT

The present invention relates to an interface circuit, for instance, for interfacing between a computer bus and a time multiplexed serial data communication link.

The communication link generally comprises a two-wire connection for distributing digital signals as time multiplexed serial data to and from various electronic circuits. The data are generally organised and transmitted according to the ARINC 429 Protocol, which specifies, among other things, word length and voltage levels representing the individual bits of the words. Each electronic circuit therefore requires an interface circuit in order to interface the communication path to, for instance, standard 8 bit digital buses.

A known type of interface circuit for implementing the ARINC 429 Protocol is produced by the Harris Corporation as integrated circuit type No. HS-3282. In this integrated circuit, incoming data are received and sampled when each word is complete, completion of a word being indicated by a gap detected by a word gap timer. A data clock is derived from the incoming data and shifts the received data into a shift register after converting the voltage levels on the communication path to standard digital signal levels. A binary "1" signal is represented by a high voltage on one of the wires of a two-wire communication path, a binary "0" is represented by a high level voltage on the other wire, and a gap is represented by 0 level on both wires. Receipt of four consecutive gaps is detected by the word gap timer as representing the end of a data word, at which time the word gap timer generates a signal to indicate that the word has been received.

Each word includes a 2 bit source-destination identifer which is compared with a user-set code and, if the two codes match, the received data is latched. Otherwise, the data is ignored and no latching takes place. When a data word is latched into the integrated circuit, an indicator flag is set so as to indicate that a valid data word is ready to be fetched.

Thus, if a computer in the associated electronic circuit wishes to read a particular parameter, it must cycle through the input data as they arrive and wait until the required parameter is present. This therefore increases the burden on the computer and causes delays.

Data for transmission to the communication path is latched into a first-in/first-out buffer from the control computer and is then shifted serially to a transmitter driver under control of the computer. Up to eight words may be stored in the buffer at any one time. Thus, the computer in the associated electronic circuit is required to control an output operation of the interface circuit, again increasing the burden on the computer and therefore reducing its capacity for other processing.

The integrated circuit type number HS-3282 includes two receivers and one transmitter sharing the same bus for communicating with the computer. Thus, while the computer is loading the first-in/first-out buffer, it cannot monitor received data so that, if the data for which it is waiting becomes available during an output operation, it is missed and the computer has to wait for it to reappear. This causes delays and again reduces the capacity of the computer for other processing.

According to the invention, there is provided an interface circuit comprising an output interface for interfacing between a data processing system and a communication path, the output interface including at least first and second first-in/first-out memories, read control means for causing the first memory to be read in preference to the second memory when the first memory contains data to be read, and write control means for writing data selectively into the first and second memories in accordance with the read priority of the data.

In a preferred embodiment, there are three or more first-in/first-out memories arranged in a hierarchy such that the first memory is read in preference to the second memory, the second memory is read in preference to the third memory, and so on.

Thus, data which are required to be made available more quickly can be read without having to read other less urgently required data, allowing delays in other parts of, for instance, an aircraft electronic control system to be minimised. In a preferred embodiment, once the contents of the first memory have been read, the contents of the second memory are read and then the contents of any further memories present in hierarchical order while new data to be read are written in the other memories.

Preferably the output interface includes a buffer latch for latching a data word to be transmitted to the communication path. Where data words comprise several bytes of data, the buffer latch allows the whole word to be read from the respective memory in several individual read cycles so that the memory is then free for receiving further data while the data word in the buffer latch is actually transmitted. Preferably, a parallel-serial converter is connected to the outputs of the memories for converting the data into a serial bit stream for transmission to the communication path.

The invention will be further described, by way of example, with reference to the accompanying drawings, in which

Figure 1 is a block schematic diagram of an interface circuit constituting a preferred embodiment of the invention;

Figure 2 is a block schematic diagram of an input interface of the interface circuit of Figure 1; and

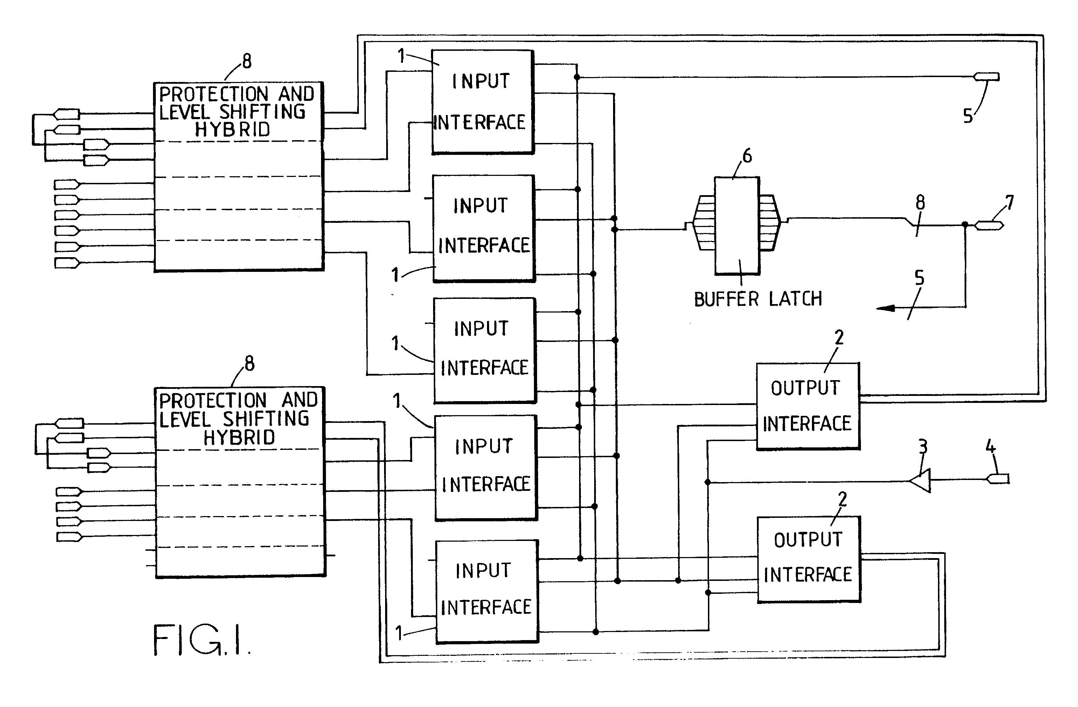

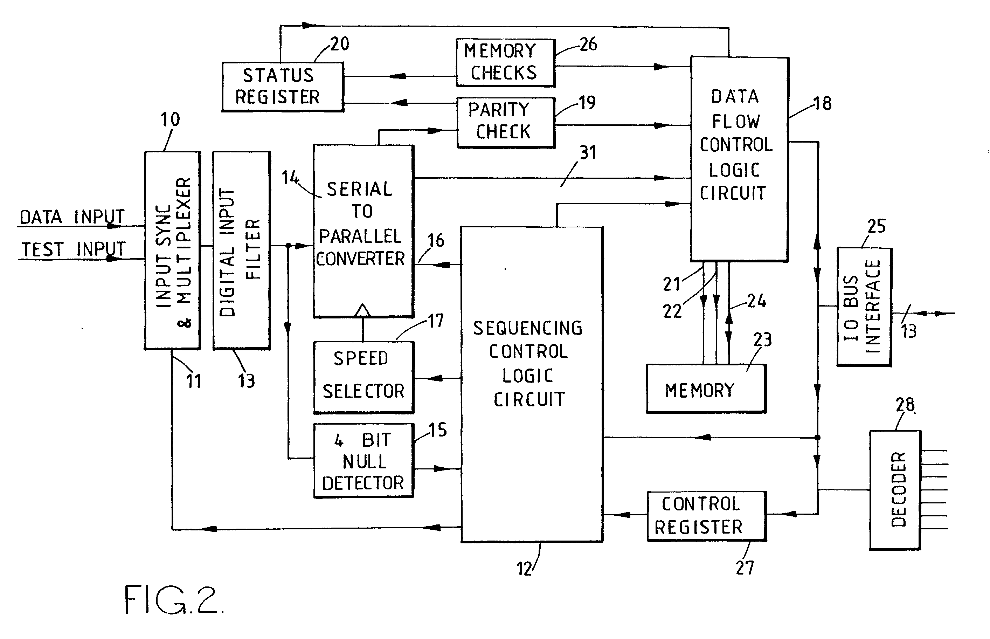

Figure 2 is a block schematic diagram of an output interface of the interface circuit of Figure 1.

The interface circuit shown in Figure 1 comprises five identical input interfaces 1 and two identical output interfaces 2. Each of the input and output interfaces 1 and 2 has a clock input connected to the output of a buffer amplifier 3 whose input is connected to a terminal 4 of the interface circuit for receiving clock pulses.

Each of the input and output interfaces 1 and 2 also has a reset input connected to a terminal 5 of the interface circuit for receiving a common reset signal for initialising the interface circuit.

Each of the input and output interfaces 1 and 2 has an input/output bus which is connected via an 8 bit bidirectional buffer latch 6 to eight lines of a 13 bit bus which, in turn, is connected via terminals 7 to an input/output bus of a computer in an electronic engine controller (not shown) of an aircraft. The remaining five lines of the input/output bus supply control signals to various parts of the interface circuit.

Each of the input interfaces 1 has a first input for receiving data from a communication path and a second input for receiving test data in order to test the operation of the interface circuit. In the arrangement shown in Figure 1, only the test inputs of the input interfaces shown at the top and second from the bottom are actually used, the test inputs of the other input interfaces 1 not being connected.

The interface circuit is provided with two identical circuits, preferably in the form of hybrids 8, each having five sections for providing input and output protection, for instance against lightning strikes, and level shifting between ARINC Protocol voltage levels and standard digital voltage levels. Seven of the sections of the hybrids 8 are connected to the data inputs and the two test inputs of the input interfaces 1, whereas two of the hybrid sections are connected to the outputs of the output interfaces 2. Further, each output interface 2 has a control line connected to the corresponding section of the hybrids 8 for allowing software selection of the data transmission speed to be made in the output sections of the hybrids 8.

The hybrids 8 are connected to interface circuit terminals which are in turn connected to corresponding communication paths in the form of twin conductor cables which carry data signals in accordance with the ARINC 429 Protocol. For test purposes, the two upper sections of the hybrids 8 are connected together. Thus, the computer of the electronic engine control system can test the operation of the interface circuit by writing test data into the output interfaces 2, which then supply the data via the sections of the hybrids 8 to the test inputs of the input interfaces 1, from which the computer receives the data and checks them for identity with the transmitted data. Thus, the whole interface circuit can effectively be tested for correct operation. During such test procedures, the input interfaces 1 whose test inputs are connected to receive the outputs from the respective output interfaces 2 via the hybrids 8 receive control signals which cause multiplexers within the input interfaces 1 to disable the data inputs and enable the test inputs. Once the test procedure has been completed, normal operation is restored by enabling the data inputs and disabling the test inputs.

One of the input interfaces 1 is shown in more detail in figure 2. The data and test inputs are connected to an input synchroniser and multiplexer 10 which receives an input select signal at an input 11 from a sequencing control logic circuit 12. The output of the circuit 10 is connected to the input of a digital input filter 13 whose output is connected to a serial to parallel converter 14 and a four-bit null detector 15. The output of the detector 15 is connected to an input of the sequencing control logic circuit 12. The serial to parallel convertor 14 has a start/stop input 16 connected to an output of the sequencing control logic circuit 12 and a clock input connected to the output of a speed selector 17 whose input is connected to an output of the sequencing control logic circuit 12. The serial to parallel convertor 14 has a 31-bit parallel output connected to an input of a data flow control logic circuit 18 and an output connected to a parity checking circuit 19. The parity checking circuit 19 has an output for supplying parity error signals to the data flow control logic circuit 18 and an output for entering errors in a status register 20.

The dataflow control logic circuit 18 has address and control outputs 21 and 22 connected to corresponding inputs of a read/write memory 23, with a bi-directional data bus 24 connecting the memory 23 to the circuit 18. The data flow control logic circuit 18 has an input connected to an output of the sequencing control logic circuit 12, an input connected to the output of the status register 20, and a bi-directional port connected via a bi-directional bus and an input/output bus interface 25 to a 13 bit input/output bus of the computer. A memory checking circuit 26 checks the memory 23 and supplies error signals to the data flow control logic circuit 18 and the status register 20.

The sequencing control logic circuit 12 is connected to the bus interface 25 and to the output of a control register 27 whose input is connected to the bus interface 25. A decoder 28 has an input connected to the bus and outputs connected to various parts of the input interface for controlling the operation thereof, in particular for determining data paths.

Operation of the input interface begins with an initialisation routine controlled by the sequencing control logic circuit 12 and the data flow control logic circuit 18 in response to a reset signal. This routine causes the speed selector 17 to select the low reception speed in accordance with the ARINC 429 Protocol. In addition, the serial to parallel convertor 16 is cleared and the multiplexer 10 selects the data input. The computer in the electronic engine control system then writes to the control register 27 so as to set the reception rate of the serial to parallel convertor 16. Data received at the data input of the multiplexer 10 are filtered by the filter 13 and converted to parallel form by the serial to parallel convertor 14. When the detector 15 detects a 4-bit null, this is signalled to the sequencing control logic circuit 12, which stops the convertor 14. The bit length and parity of the received word in the convertor 14 are checked and, in the absence of errors, the data flow control logic circuit 18 stores the received word in the memory 23.

Each received data word includes 2-bits representing one of four possible source destination identifiers (one for each engine of an aircraft) and 8-bits representing an ARINC 429 label. The source destination identifier and the label address the location in the memory 23 where the remaining data bits of the received word are stored. Thus, the memory 23 is divided into four partitions, each of which is further sub divided into 256 locations so that each label of each source destination identifier has a unique memory location. Received data overwrite data previously stored at the same memory location.

When the computer requires data from the memory 23, this is controlled by and supplied via the dataflow control logic circuit 18. If both the computer and the serial to parallel convertor 14 require access to the memory simultaneously, the control computer is given priority and the convertor 14 has to wait. However, this is arranged such that computer access time to the memory 23 is less than the time for a four bit null indicating the end of a received word, so that the computer can access the memory without any newly received data at the data input being lost.

The memory checking circuit 26 performs, from time to time, a memory checking routine as follows. The data stored at a particular memory location are read and stored in a temporary memory for subsequent retrieval and rewriting. Test data are then written to the location in the memory 23 and the stored data is then read and compared with the test data. The result of the test is written in the status register 20, and the original data is rewritten into the memory location. The computer has access to parity and memory check information written in the status register 20 via the data flow control logic circuit 18.

During checking of the whole interface circuit, the computer supplies a code to the control register 27 which causes the multiplexer 10 to disable the data input and enable the test input. Also, where high speed reception according to the ARINC 429 Protocol is required, the computer writes to the control register 27 which causes the speed selector 17 to select the higher convertor speed via the sequencing control logic circuit 12.

Because the memory address is formed from the ARINC 429 label and source destination identifier bits, the control computer in the electronic engine control system has easy access to any required word. This relieves the software load within the computer by allowing the hardware to decode and select ARINC 429 labels. The input interface stores all data words received at the data input and the control computer has immediate access to these words merely by specifying the label and source destination identifier, which are then used as the memory address for reading the required data. All input data are therefore immediately accessible with a very short access time.

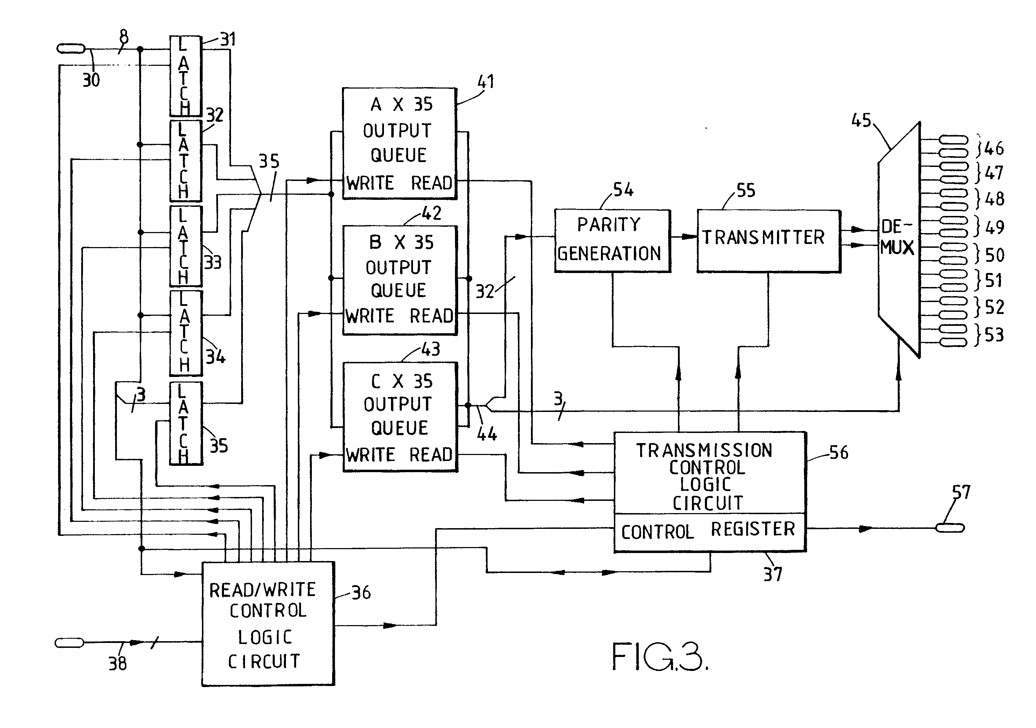

The output interface 2 is shown in more detail in Figure 3. This output interface includes a demultiplexer (described hereinafter) for allowing up to eight communication paths to be driven, but only one is used for each of the output interfaces 2 shown in Figure 1.

An 8 bit input/output bus 30 is connected to interface circuit terminals for connection to a port of the computer in the electronic engine control system. The bus 30 is connected to five identical 8 bit latches 31 to 35, to a read/write control logic circuit 36, and to a control register 37. Control signals for the input/output bus, including address strobe, data strobe, chip select, reset, and read/write, are received via a bus 38 by the read/write control logic circuit 36. The read/write control logic circuit 36 has outputs for individually controlling latching operations of the latches 31 to 35. The latches 31 to 34 each receive 8 bits of a 32 bit data word for transmission, whereas the latch 35 receives 3 bits for specifying which of 8 communication paths is to receive the data.

The outputs of the latches 31 to 35 provide a 35 bit bus which is connected in parallel to the data inputs of first, second, and third first-in/first-out memories 41, 42, and 43, respectively. Each of the memories is, for instance, arranged as a random access memory addressed by first and second counters for defining the "head" and "tail" of an output queue of 35 bit words. Each time a new word is written into the memory, the tail counter is incremented whereas, each time a word is read from the memory, the head counter is incremented. When the head and tail counters hold the same count, the output queue is empty. The memory 41 has a maximum capacity of A x 35 bit words in the output queue, the capacity of the memory 42 is B words and the capacity of the memory 43 is C words. The memories 41 to 43 have write inputs which are individually controlled by outputs of the read/write control logic circuit 36.

The outputs of the output queue memories 41 to 43 are connected in parallel to a 35 bit bus 44 whose 3 most significant bits are connected as address inputs to a demultiplexer 45. The de-multiplexer 45 has 8 pairs of outputs 46 to 53, each of which can be selected for providing signals in accordance with the ARINC 429 Protocol to a corresponding communication path. In an alternative embodiment, the de-multiplexer is omitted and connection to a single communication path only is provided. As mentioned previously, only one of the outputs is used in each of the output interfaces 2 shown in Figure 1, and is connected to the interface circuit output via a section of one of the hybrids 8.

The other 32 bits of the bus 44 are connected to a parity generator 54, whose output is connected to the input of a transmitter 55. The transmitter includes a parallel-to-serial convertor whose output is connected to logic and drive circuits for providing signals suitable for driving the communication path via the de-multiplexer 45.

A transmission control logic circuit 56 is associated with the control register 37 and has outputs for individually controlling read operations of the memories 41 to 43, the parity generator 54, and the transmitter 55. The control register 37 has an input connected to an output of the read/write control logic circuit 36 and an output connected to a terminal 57 which supplies a transmission speed signal to the associated section of the respective output section of the hybrid 8 as shown in Figure 1.

When the interface circuit is first activated, an initialisation routine initialises the output interface by resetting all logic circuits and clearing the output queue memories 41 to 43 and the control register 37. The engine electronic control computer then writes data to the control register 37 for selecting odd or even parity and high or low transmission rate, these parameters being supplied to the respective output sections of the hybrid 8 and, via the transmission control logic circuit 56, to the parity generator 54 and the transmitter 55. The control register data are supplied via the input/output bus 30 and writing to the control register is controlled by the read/write control logic circuit 36 in response to the control signals received on the bus 38.

Data to be transmitted are supplied as five consecutive 8 bit bytes to the bus 30 and these are latched into the latches 31 to 35 in five consecutive latching operations controlled by the logic circuit 36. When the latching of the 5 bytes is complete, the whole 35 bit word is transferred into one of the output queue memories 41 to 43 in accordance with control signals and data on the bus 30 indicating the transmission priority for the data word. Thus, data which require to be transmitted with the minimum delay are stored in the memory 41. Data which are required to be transmitted without undue delay but not as quickly as data in the memory 41 are stored in the memory 42. Remaining data of lower transmission priority are stored in the memory 43.

The transmission control logic circuit 56 monitors the states of the output queues in the memories 41 to 43 by comparing the contents of the head and tail counters of each memory to ascertain whether the memory contains any data words for transmission. The memories 41 to 43 are monitored in sequence so that the contents of the memory 41 are always transmitted with highest priority i.e. before the contents of the other memories. Similarly, the contents of the memory 42 are transmitted with higher priority i.e. before the contents of the memory 43 are transmitted. This may be achieved by either of two strategies. According to the first strategy, the contents of the memory 41 are transmitted until this memory is empty, then the contents of the memory 41 are transmitted until this memory is empty and finally the contents of the memory 43 are transmitted until this memory is empty, the sequence repeating in this order. In the alternative strategy, the contents of the memory 41 are transmitted until this memory is empty, after which the first word in the output queue memory 42 is transmitted. The control logic 56 then checks whether any new words have been written into the memory 41. If so, then the contents of the memory 41 are transmitted. If not, then the next data word in the output queue memory 42 is transmitted. Similarly, when all the contents of the memory 42 have been transmitted, the first word in the memory 43 is transmitted and the contents of the memories 41 and 42 are checked. If neither memory contains data for transmission, then the next word in the memory 43 is transmitted. Otherwise, data from the memory 41 or 42 is transmitted.

Access to the output queue memories 41 to 43 is on a first-come/first-served basis. Thus, if one of the memories 41 to 43 is reading data for transmission under control of the transmission control logic circuit 56 when new data for writing to that memory is latched into the latches 31 to 35, the data from the latches cannot be stored until the transmission control logic circuit 56 relinquishes control, and vice versa. However, the clock frequency of the output interface is sufficiently high to avoid any loss of data i.e. the contents of the latches 31 to 35 will be written to the desired memory before fresh data are received on the bus 30 for latching, and without delaying transmission to the communication path. The transmission control logic circuit 56 is arranged to cause the transmitter 55 to transmit 4 null bits after each data word has been transmitted, in accordance with the ARINC 429 Protocol.

Status registers (not shown) are provided so as to make available information concerning the number of data words waiting for transmission in each of the three output queue memories 41 to 43. Also, in order to allow the operation of the memories 41 to 43 to be fully tested, access to the memories by the transmitter control logic circuit 56 may be disabled and software read access provided.

The output interface thus allows data which is required without delay to be supplied immediately and without having to wait for less urgent data to be transmitted. Any number of output queues can be provided according to the number of degrees of transmission priority which the data may have. However, in practise for implementing the ARINC 429 Protocol, 3 output queues have proved adequate.

If necessary, the parity and transmission speed data may be associated with the various communication paths connected to the de-multiplexer 45. Thus, the transmission rate and the parity may be individually set for each communication path. The sizes A, B and C of the memories 41 to 43 may be selected in accordance with requirements so as to ensure that, for any particular application, the output queues can never be overloaded and prevent the receipt of further data for transmission from the engine electronic control computer.

Thus, the output interface requires no intervention from the control computer and relieves the control computer of the burden of controlling transmission of data to the communication path or paths.

## Claims

1. An interface circuit comprising an output interface for interfacing between a data processing system and a communication path, characterised in that the output interface (2) includes at least first and second first-in/first-out memories (41-43), read control means (56) for causing the first memory (41) to be read in preference to the second memory (42) when the first memory (41) contains data to be read, and write control means (36) for writing data selectively into the first and second memories (41, 42) in accordance with the read priority of the data.

2. A circuit as claimed in Claim 1, characterised in that the output interface (2) includes a third memory (43), the read control means (56) being arranged to cause the second memory (42) to be read in preference to the third memory (43) when the second memory (42) contains data to be read, the write control means (36) being arranged to write data of lowest read priority into the third memory (43).

3. A circuit as claimed in Claim 1 or 2, characterised in that the read control means (56) are arranged to cause the first memory (41) to be read whenever the first memory (41) contains data to be read.

4. A circuit as claimed in any one of the preceding claims, characterised in that the output interface (2) includes a buffer latch (31-35) connected between an input of the output interface circuit (2) and the memories (41-43).

5. A circuit as claimed in any one of the preceding claims, characterised in that the output interface (2) includes a parallel-serial converter (55) connected to the memories (41-43) and an output of the output interface (2).

FIG.I.

EP 0 420 409 A2

FIG.2.

FIG.3.

EP 0 420 409 A2